# EUROPEAN PATENT APPLICATION

(11) **EP 0 648 422 A2**
(43) Date of publication of application: **19.04.1995**
(21) Application number: 94650028.7
(22) Date of filing: 19.10.1994
(51) Int. Cl.: A21D 8/06, A21D 6/00, A21B 3/00

(54) **Pre-baked foods and their method of manufacture**

(30) Priority: 19.10.1993 IE 930793
(71) Applicant: PENMOY HOLDINGS LIMITED, Dublin 2 (IE)
(72) Inventor: McNamee, Ronan Gerard, Dartry, Dublin 6 (IE)
(74) Representative: McKeown, Yvonne Mary

(57) **Abstract**

A pre-baked edible product such as bread is prepared by baking the product until raising is complete. Hot flowing air is deflected away from the product to ensure that the raised product coagulates into the risen volume without significant browning of the product surface. A baffle frame 1 is disposed within a flat baking tray A to deflect heat from the product during pre-baking.

## Description

The present invention relates to bakery products and in particular to a method of producing pre-baked foods suitable for cold storage or freezing prior to completion of baking.

In the well-known process for preparing baked foods such as breads and confectionary, the ingredients are mixed together with a raising agent. Commonly used raising agents are yeast, bread soda and baking powder. These different agents act in different ways to achieve the same result, namely to provide small bubbles of gas within the dough or batter. When the dough or batter is placed in a hot oven, the trapped gas expands and, consequently, the product rises. This phenomenon is known as "oven spring" and it typically produces a 30% volume increase in the first few minutes of baking. As the baking continues, the gluten in the flour used in the mixture stretches around the bubbles of gas, until eventually it loses its elasticity and the product is set or coagulated in the shape it has assumed. Continued baking after this point serves to give the product the crustiness and/or brown colouration to which the consumer is accustomed.

Products such as bread and confectionery can be stored in freezers. Once thawed, fully cooked goods of this type frequently do not have the same aesthetic appeal as freshly baked products. Furthermore, some products of this type are preferably eaten warm or hot and reheating of a fully-baked product can result in dehydration and surface burning. For these reasons, a partially cooked bakery product is desirable so that it can be taken from cold storage and the baking can be completed in a domestic oven. In this way, the consumer is provided with a product having all the desirable organoleptic characteristics of a freshly-baked product.

It is an object of the present invention to provide a process for preparing a pre-baked product, the cooking of which can be completed after a period of cold storage. It is also an object of the invention to provide apparatus for use in the production of pre-baked products.

Accordingly, the present invention provides a process for preparing a pre-baked product such as for example bread or confectionery, the process comprising preparing an edible mixture including a raising agent, pre-baking the edible mixture in an oven at a temperature and for a time sufficient for the product to rise characterised by deflecting the heat away from the product during the pre-baking step while continuing baking for a time sufficient to set the product in its risen volume without substantially browning the exterior surface of the product. In a preferred embodiment, the heat is deflected by baffle means which substantially prevents hot flowing air from flowing about the surface of the product. The baffle means is preferably provided with at least one deflecting plate for diverting hot flowing air away from the product.

In an exemplary process according to the invention, the edible mixture is pre-baked at a temperature of about 175°C for about 22 minutes, until raising is complete and then at about 150°C for about another 6 minutes to set the product in the risen volume.

The invention also provides a baffle frame for use in a process for preparing a pre-baked food product such as for example bread or confectionary including a raising agent, comprising a wall forming a frame for substantially surrounding the sides of the product during pre-baking, the height of the wall being at least substantially equal to the height of the risen product, so that heat is deflected away from the product during pre-baking to enable the product to set in its risen volume without substantial browning of its exterior surface. The wall conveniently includes an air deflecting plate associated therewith for diverting hot flowing air away from the surface of the product, the wall being upstanding and comprising an upper side wall and a lower side wall with the air deflecting plate located therebetween. The upper side wall assists in restricting the movement of hot flowing air over the product. A gap is provided between the upper side wall and the air deflecting plate for leading the hot flowing air in the desired path away from the surface of the product. The frame may be formed integrally with a tray on which the product is placed for pre-baking.

The invention further provides a pre-baked food product such as for example bread or confectionary, characterised in that the product is raised and set in its raised volume but its exterior surface is substantially unbrowned.

The heat deflection is conveniently accomplished by the deployment of at least one baffle which deflects hot air from the product during the pre-baking and enables the product to set without browning its exterior. In a preferred embodiment, a coagulation rack (baffle frame) is provided having the deflecting baffle associated with it. Alternatively, a baking tray is provided having an integrally formed deflecting baffle frame. The baffle serves to help keep hot blowing air such as exists in a fan or convection oven away from the surface of the product. It is principally the hot blowing air which causes the browning of baked products. According to the invention, the product is held in substantially static hot air during pre-baking and accordingly browning is avoided.

Once the product has been coagulated without being fully cooked, it is removed from the oven, allowed to cool, then packaged for storing at cold temperatures or frozen for long-term storage.

The invention will now be described more particularly with reference to the accompanying drawings and to the following example. In the drawings:

Figure 1 is a perspective view of a baffle frame according to the invention superimposed on a flat baking tray.

Figure 2 is an enlarged sectional side view on lines I-I of Figure 1.

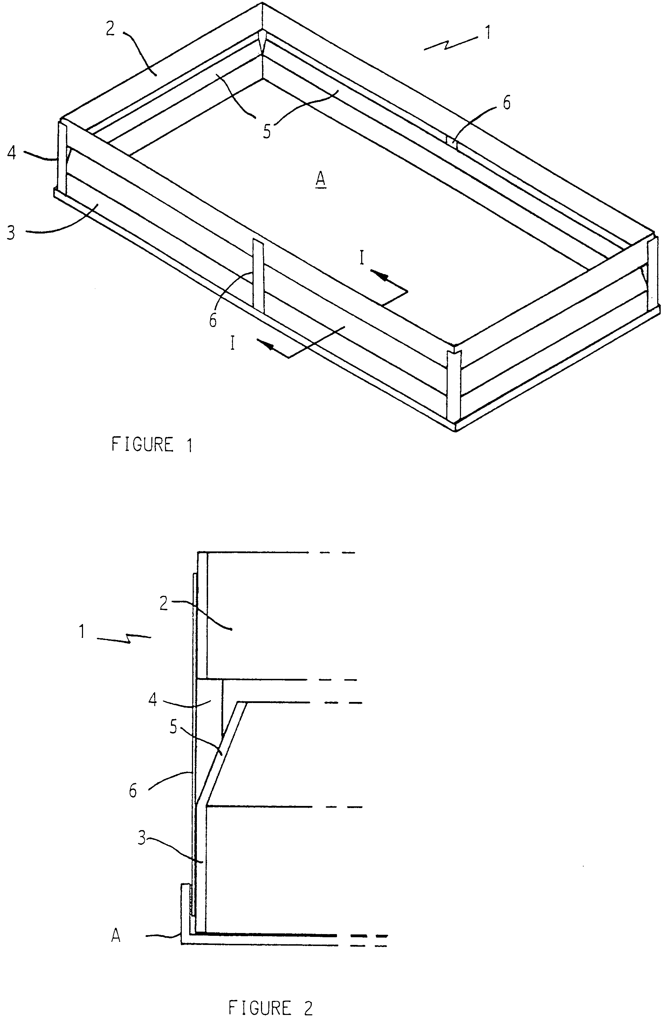

### Example

A standard dough is prepared from flour, salt, water, sugar, vegetable oil and baking powder.

The dough comprises
3.6kg (8 lbs) white flour
5.4kg (12 lbs) wholemeal
9.1kg (20 lbs) buttermilk
225gms (8 oz) bicarbonate of soda (baking powder) or yeast
340gms (12 oz) cake margarine
225gms (8 oz) sugar
225gms (8 oz) salt

The ingredients are weighed accurately and mixed in a bakery mixer. After a suitable resting period to relax the dough, it is divided from bulk into portions of about 100g. Each portion is formed into the desired final shape, which is about 8cm or less in any dimension. The shaped products are then placed on a baking tray A which is provided with a baffle frame 1. The baffle frame 1, which sits into the baking tray A, has deflector plates or baffles 5 which deflect flowing air away from the baking dough. The frame 1 also has an upper side wall 2 which serves to restrict the movement of turbulent air over the product. The gap between the upper side wall 2 of the baffle frame 1 and the deflector plates 5 offers a particularly advantageous air flow for preventing surface browning. The upper and lower side walls 2, 3 are connected by corner supports 4. Further supports 6 are provided centrally of the long side of the frame 1.

The tray and frame assembly is placed in a hot convection or fan oven, set to 175°C, and allowed to stand for 22 minutes, until the "oven spring" or raising of the shaped products is complete. During that time, the heat is deflected away from the product by the deflector plates 5 so that the normal coagulation process can occur without any significant browning of the product surface. After a further 6 minutes cooking time at 150°C, the product is removed from the oven, allowed to cool, packaged and frozen at minus 18°C.

To reconstitute the product for consumption, it can be taken directly from the freezer, placed in an oven pre-set at 210°C and baked for 7 minutes to brown the surface. The product is then ready for consumption.

The baking tray 1 used in the present example has dimensions of 76 x 45 x 2.5 cm (30 x 18 x 1 inches) and the baffle frame 1 has dimensions of 75 x 44.5 x 10 cm (29.5 x 17.5 x 4 inches). The height of the side walls 2 and 3 and deflector plates 5 of the baffle frame 1 can of course be adjusted to accommodate a larger sized baked product. The important point is that the baffle frame should be at least about the same height as the product when risen to ensure that hot flowing air is kept substantially away from the baking product, thereby resisting the tendency to surface browning while allowing coagulation of the product interior. The baffle frame can be formed as a coagulation rack to be fitted removably into a standard baking tray, as described above, or alternatively may be integrally formed with the baking tray. It is also envisaged that the coagulation rack and or integral frame and baking tray may be so formed as to be stackable, for large scale production.

It will of course be understood that the invention is not limited to the specific details described herein, which are given by way of example only, and that various modifications and alterations are possible within the scope of the invention as defined in the appended claims.

## Claims

1. A process for preparing a pre-baked product such as for example bread or confectionery, the process comprising preparing an edible mixture including a raising agent, pre-baking the edible mixture in an oven at a temperature and for a time sufficient for the product to rise characterised by deflecting the heat away from the product during the pre-baking step while continuing baking for a time sufficient to set the product in its risen volume without substantially browning the exterior surface of the product.

2. A process as claimed in claim 1 characterised by deflecting the heat by baffle means (1) which substantially prevents hot flowing air from flowing about the surface of the product.

3. A process as claimed in claim 2 in which the baffle means (1) is provided with at least one deflecting plate (5) for diverting hot flowing air away from the product.

4. A process according to any one of claims 1 to 3 characterised by pre-baking the edible mixture at a temperature of about 175°C for about 22 minutes, until raising is complete and then at about 150°C for about another 6 minutes to set the product in the risen volume.

5. A baffle frame for use in a process for preparing a pre-baked food product such as for example bread or confectionary including a raising agent, comprising a wall (2,3) forming a frame (1) for substantially surrounding the sides of the product during pre-baking, the height of the wall (2,3) being at least substantially equal to the height of the risen product, so that heat is deflected away from the product during pre-baking to enable the product to set in its risen volume without substantial browning of its exterior surface.

6. A baffle frame according to claim 5 in which the wall (2,3) includes an air deflecting plate (5) associated therewith for diverting hot flowing air away from the surface of the product.

7. A baffle frame according to claim 6, in which the wall (2,3) is upstanding and comprises an upper side wall (2) and a lower side wall (3) with the air deflecting plate (5) located therebetween, and in which the upper side wall (2) assists in restricting the movement of hot flowing air over the product.

8. A baffle frame according to claim 7 in which a gap is provided between the upper side wall (2) and the air deflecting plate (5).

9. A baffle frame according to any of claims 5 to 8, in which the frame (1) is formed integrally with a tray (A) on which the product is placed for pre-baking.

10. A pre-baked food product such as for example bread or confectionary, characterised in that the product is raised and set in its raised volume but its exterior surface is substantially unbrowned.
